# EUROPEAN PATENT SPECIFICATION

(11) **EP 2 243 966 B1**
(45) Date of publication and mention of the grant of the patent: **28.12.2011**
(21) Application number: 10160542.6
(22) Date of filing: 21.04.2010
(51) Int. Cl.: F16B 2/24, F16B 7/04, F16B 7/18

(54) **Rod connector for connecting threaded rods**
Stangenverbinder für das Verbinden von Gewindestangen
Connecteur de tiges pour connexion de tiges filetées

(30) Priority: 21.04.2009 NL 2002774
(43) Date of publication of application: 27.10.2010
(73) Proprietor: J. van Walraven Holding B.V., 3641 RK Mijdrecht (NL)
(72) Inventor: van Walraven, Jan, 3641 GP Mijdrecht (NL)
(74) Representative: Houben, Christiaan Hein Willem Frans

(56) References cited:
- DE-U1- 9 200 441
- GB-A- 1 433 699
- GB-A- 2 222 431
- JP-A- 7 197 917
- US-A- 4 102 587
- US-A- 4 671 698

## Description

The present invention relates to a rod connector for connecting threaded rods. Such a rod connector is known.

In US 4 671 698 is disclosed a sleeve for interconnecting rods provided with threads. The sleeve consists of a housing with a relatively smooth inside surface. In use the rods are brought with their threads into engament with each other, after which the sleeve is slided over the overlapping area of the two rods. The inside dimensions of the sleeve are such that it makes separation of the two rods in the overlapping area impossible.

GB 2222431A discloses a bracket with a U-shape. The bracket has two parallel limbs with elongate holes in them. Tubes can be passed through the elongate holes and clamped together by means of a clamping screw. The preamble of claim 1 is based on this document.

The present invention has for an object to provide an alternative rod connector for connecting threaded rods.

This object is achieved by a connector according to claim 1.

The rod connector according to the invention is relatively easy to manufacture compared to the rod connector known from the prior art. Furthermore, the rod connector according to the invention allows for an easy visual inspection of the connection between the threaded rods. In practise it is important that the overlapping area in which the threads of the rods engage each other is of sufficient length so as to be able to withstand pulling loads on the connection, e.g. due to loads suspending from one of the rods.

Preferred embodiments of the rod connector according to the invention are laid down in the dependent claims.

The invention furthermore relates to a method according to claim 9.

The invention will be elucidated in the following description of a preferred embodiment with reference to the drawing, wherein:
Fig. 1 shows a bracket of a preferred embodiment of a rod connector according to the invention, and
Figs 2 - 6 illustrate the use of the rod connector of Fig. 1.

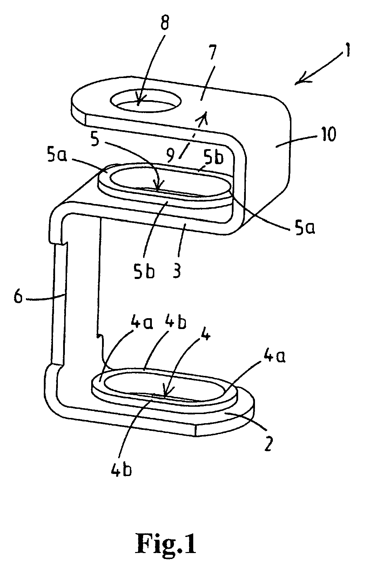

Fig. 1 shows a bracket 1 of a rod connector according to the invention. The bracket 1 has a first flange 2 and a second flange 3 which are substantially parallel to each other. The first flange is provided with an elongate hole 4. The second flange is provided with an elongate hole 5. The elongate holes 4 and 5 are aligned with each other. The holes 4 and 5 have essentially an oval shape with preferably, as shown in the drawing, an edge with two opposing half circle shaped edge portions 4a, 5a and two opposing straight edge portions 4b, 5b connecting the half circle edge portions 4a, 5a.

It is noted that the shape of the holes 4 and 5 as is shown in the drawing is not essential and could well be replaced by another shape as long as the contour of two threaded rods which are in overlapping engagement with each other narrowly fits through the elongate holes. Another essentially oval shape may thus be applied. It is also contemplated that instead of two, more than two threaded rods which are in engagement with each other can be retained together. This can be done by providing for example a substantial triangular shape or by an elongate slot shape in which three threaded holes in a side-by-side relation fit.

The first flange 2 and the second flange 3 are interconnected by a connection portion 6 of the bracket 1.

The bracket 1 furthermore comprises an end flange 7 which is substantially parallel to the first and second flanges 2 and 3. The end flange 7 is interconnected with the second flange 3 by means of a second connection portion 10 of the bracket 1. The bracket 1 thereby is generally S-shaped. The end flange 7 is provided with a hole 8 which forms a passage for a threaded rod. In the preferred embodiment the hole 8 is circular and has substantially the same radius as the radius of curvature of the curved edge portions 4a, 5a of the elongate holes 4 and 5. The hole 8 is aligned with one half of the elongate holes 4, 5 in the sense that the central axis of the hole 8 is in line with the centre of curvature of one of the curved edges 4a, 5a of the elongate holes 4 and 5.

The end flange 7 has a stop surface 9 on the side of the end flange 7 that faces the second flange 3. The stop surface 9 is located adjacent the hole 8 in line with one half of the elongate holes 4, 5.

The bracket 1 is preferably made of a metal strip material, which may be of steel. The bracket is manufactured by cutting a piece of strip material to a suitable length. Next, the elongate retaining holes 4 and 5, and the hole 8 are punched out of the strip material. Finally, the strip may be bended such that the flanges 2, 3 and 7 are parallel and the holes 4, 5 and 8 are aligned as is described in the above.

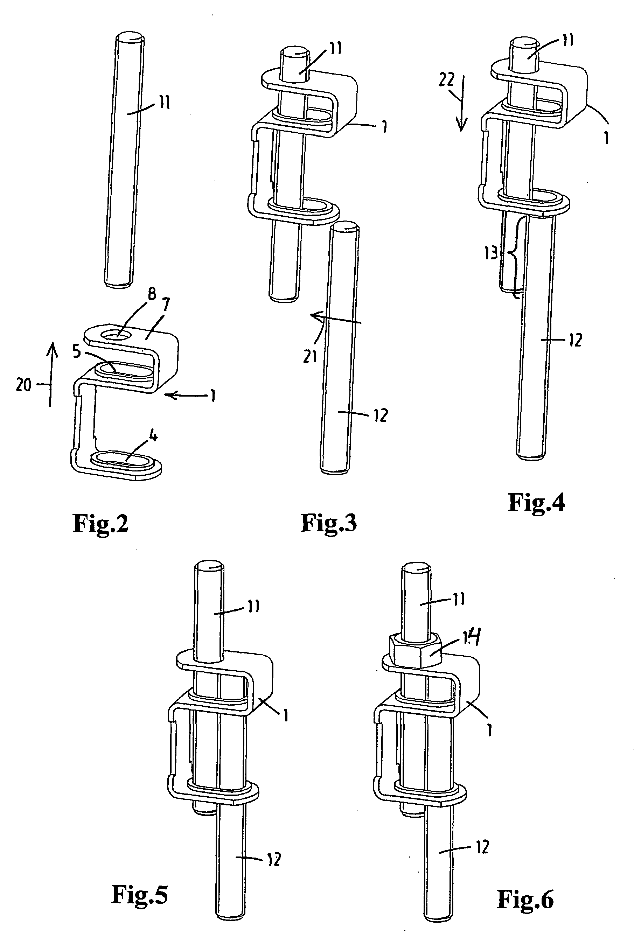

With reference to Figs 2 - 6 the use of the rod connector will be described.

In Fig. 2 is shown a suspended threaded rod 11 which at an upper end may be suspended from a ceiling, e.g. by connecting it to a rail mounted on the ceiling. The bracket 1 is slided from the lower end of the suspended rod 11 upwards, as is indicated by arrow 20, such that the rod is passed through the hole 8 in the end flange 7 and through the elongate holes 4 and 5 as is illustrated in Fig. 3.

In Fig. 3 is indicated by arrow 21 how a lower rod 12 is moved sideways towards the suspending rod 11 such that the threads of both rods 11, 12 are brought into engagement in an overlapping area 13, which is shown in Fig. 4.

In Fig. 4 is indicated by an arrow 22 how the bracket 1 is moved downwards along the suspended rod 11, such that the overlapping area 13 of the two rods 11, 12 is inserted through the elongate holes 4 and 5. The bracket 1 is moved downwards until the stop surface 9 on the end flange 7 abuts the end face of the lower rod 12. This state is shown in Fig. 5. The downward movement of the bracket 1 is thus limited by the upper end of the lower rod 12. The rods 11, 12 are retained in engagement with each other in the overlapping area 13 by the elongate holes 4 and 5.

Next, a nut 14, which was already present on the suspended rod 11 before the bracket was moved upwards on the suspended rod 11, can be screwed downwards such that it engages an upper surface of the end flange 7 surrounding the hole 8. The bracket 1 is now locked in position by the nut 14, since the end flange 7 is retained between the upper end of the lower rod 12 and the nut 14.

## Claims

1. Rod connector for connecting threaded rods, which rod connector is adapted for holding in engagement two or more threaded rod sections which are engaging with their threads in an overlapping area, wherein said rod connector comprises a bracket (1) with a plurality of flanges (2,3,7), wherein at least one flange (2,3) is provided with a retaining opening (4,5) such that two or more threaded rods (11,12) with their threads in mutual engagement fit in the retaining opening (4,5) and are prevented from becoming disengaged, and the bracket including at least one connection portion (6,10) interconnecting the flanges, **characterised in that**
one of flanges (2,3,7) of the bracket is an end flange (7), said end flange (7) being provided with a round opening (8) for passing through a first rod (11) and said end flange (7) including at least one stop surface (9) adjacent said round opening for abutting an end face of at least one second rod (12), wherein the bracket (1) is substantially S-shaped with the end flange (7) at an upper end and two flanges (2,3) with retaining openings (4,5) below it.

2. Rod connector according to claim 1, wherein the bracket (1) comprises parallel flanges (2,3,7).

3. Rod connector according to claim 1 or 2, wherein the bracket (1) comprises three parallel flanges (2,3,7).

4. Rod connector according to any one of claim 2 - 3, wherein the rod connector includes a nut (14) which, in a mounted state, engages the end flange (7).

5. Rod connector according to any one of the preceding claims, wherein the retaining opening (4,5) in the flanges (2,3) is of an elongate shape such that two threaded rods with their threads in mutual engagement fit in the retaining opening and are prevented from becoming disengaged.

6. Rod connector according to any one of the preceding claims, wherein the bracket (1) is made of (metal) strip material.

7. Method for manufacturing a rod connector for connecting threaded rods according to any of claims 1-6, wherein
- a metal strip is provided,
- a round hole (8) and at a distance therefrom at least two spaced apart elongate holes (4,5) are punched out in the strip material,
- the strip is bended such that the two elongate holes are aligned and the round hole is aligned with one side of the elongate holes.

## Patentansprüche

1. Stangenverbinder zum Verbinden von Gewindestangen, wobei der Stangenverbinder dafür ausgelegt ist, zwei oder mehr Gewindestangenabschnitte, die mit ihren Gewinden in einem Überlappungsbereich in Eingriff sind, in Eingriff zu halten, wobei der Stangenverbinder einen Bügel (1) mit einer Mehrzahl von Flanschen (2, 3, 7) umfasst, wobei wenigstens ein Flansch (2, 3) derart mit einer Rückhalteöffnung (4, 5) versehen ist, dass zwei oder mehr Gewindestangen (11, 12) mit ihren Gewinden in wechselseitigem Eingriff in die Rückhalteöffnung (4, 5) passen und eine Lösung des Eingriffes verhindert wird, wobei der Bügel wenigstens einen Verbindungsabschnitt (6, 10) aufweist, der die Flansche wechselseitig verbindet, **dadurch gekennzeichnet, dass** einer der Flansche (2, 3, 7) des Bügels ein Endflansch (7) ist, wobei der Endflansch (7) mit einer Rundöffnung (8) zum Durchführen einer ersten Stange (11) versehen ist und der Endflansch (7) wenigstens eine Anschlagsoberfläche (9) benachbart zu der Rundöffnung zur Anlage an einer Endfläche wenigstens einer zweiten Stange (12) beinhaltet, wobei der Bügel (1) im Wesentlichen S-förmig mit dem Endflansch (7) an einem oberen Ende und zwei Flanschen (2, 3) mit Rückhalteöffnungen (4, 5) darunter ist.

2. Stangenverbinder nach Anspruch 1, wobei der Bügel (1) parallele Flansche (2, 3, 7) umfasst.

3. Stangenverbinder nach Anspruch 1 oder 2, wobei der Bügel (1) drei parallele Flansche (2, 3, 7) umfasst.

4. Stangenverbinder nach einem der Ansprüche 2 bis 3, wobei der Stangenverbinder eine Mutter (14) beinhaltet, die in einem montierten Zustand mit dem Endflansch (7) in Eingriff ist.

5. Stangenverbinder nach einem der vorhergehenden Ansprüche, wobei die Rückhalteöffnung (4, 5) in den Flanschen (2, 3) eine längliche Form aufweist, sodass zwei Gewindestangen mit ihren Gewinden in wechselseitigem Eingriff in die Rückhalteöffnung passen und eine Lösung des Eingriffes verhindert wird.

6. Stangenverbinder nach einem der vorhergehenden Ansprüche, wobei der Bügel (1) aus einem (Metall-)Streifenmaterial besteht.

7. Verfahren zum Herstellen eines Stangenverbinders zum Verbinden von Gewindestangen nach einem der Ansprüche 1 bis 6, wobei
ein Metallstreifen vorgesehen wird,
ein Rundloch (8) und in einem Abstand von diesem wenigstens zwei beabstandete Langlöcher (4, 5) in dem Streifenmaterial ausgestanzt werden,
der Streifen derart gebogen wird, dass die beiden Langlöcher ausgerichtet sind und das Rundloch mit einer Seite der Langlöcher ausgerichtet ist.

## Revendications

1. Connecteur de tiges pour raccorder des tiges filetées, lequel connecteur de tiges est adapté pour maintenir en mise en prise deux sections de tige filetée ou plus qui sont mises en prise avec leurs filetages dans une zone de chevauchement, dans lequel ledit connecteur de tiges comprend un support (1) avec une pluralité de rebords (2, 3, 7), dans lequel au moins un rebord (2, 3) est prévu avec une ouverture de retenue (4, 5) de sorte que deux tiges filetées (11, 12) ou plus avec leurs filetages en mise en prise mutuelle, s'adaptent dans l'ouverture de retenue (4, 5) et ne peuvent pas se dégager, et le support comprenant au moins une partie de connexion (6, 10) interconnectant les rebords, **caractérisé en ce que** :
l'un des rebords (2, 3, 7) du support est un rebord d'extrémité (7), ledit rebord d'extrémité (7) étant prévu avec une ouverture ronde (8) pour passer à travers une première tige (11) et ledit rebord d'extrémité (7) comprenant au moins une surface de butée (9) adjacente à ladite ouverture ronde pour venir en butée contre une face d'extrémité d'au moins une deuxième tige (12), dans lequel le support (1) est sensiblement en forme de S avec le rebord d'extrémité (7) au niveau d'une extrémité supérieure et deux rebords (2, 3) avec des ouvertures de retenue (4, 5) au-dessous de ce dernier.

2. Connecteur de tiges selon la revendication 1, dans lequel le support (1) comprend des rebords parallèles (2, 3, 7).

3. Connecteur de tiges selon la revendication 1 ou 2, dans lequel le support (1) comprend trois rebords parallèles (2, 3, 7).

4. Connecteur de tiges selon l'une quelconque des revendications 2-3, dans lequel le connecteur de tiges comprend un écrou (14) qui, dans un état monté, vient en prise avec le rebord d'extrémité (7).

5. Connecteur de tiges selon l'une quelconque des revendications précédentes, dans lequel l'ouverture de retenue (4, 5) dans les rebords (2, 3) a une forme allongée de sorte que deux tiges filetées avec leurs filetages en mise en prise mutuelle, s'adaptent dans l'ouverture de retenue et ne peuvent pas se dégager.

6. Connecteur de tiges selon l'une quelconque des revendications précédentes, dans lequel le support (1) est réalisé avec un matériau en bande (métallique).

7. Procédé pour fabriquer un connecteur de tiges pour raccorder des tiges filetées (1) selon l'une quelconque des revendications 1-6, dans lequel :
une bande de métal est prévue,
un trou rond (8) et à une certaine distance de ce dernier, au moins deux trous allongés espacés (4, 5) sont perforés dans le métal en bande,
la bande est courbée de sorte que les deux trous allongés sont alignés et le trou rond est aligné avec un côté des trous allongés.
